# EUROPEAN PATENT SPECIFICATION

(11) **EP 2 434 755 B1**
(45) Date of publication and mention of the grant of the patent: **19.03.2014**
(21) Application number: 10777412.7
(22) Date of filing: 21.05.2010
(51) Int. Cl.: H04N 7/16, H04N 7/18, H04N 7/173, H04N 21/472, H04N 21/214

(54) **ADDRESSING SYSTEM FOR DVB-T OR DVB-C DIGITAL MULTIPLEX TELEVISION SERVICES FOR THE HEADENDS OF HOTELS, HOSPITALS AND THE LIKE, AND AN ANTI-INTRUSION SYSTEM FOR SAID ADDRESSING SYSTEM.**
ADRESSIERUNGSSYSTEM FÜR DVB-T- ODER DVB-C-MULTIPLEX-DIGITALFERNSEHDIENSTE ZUM ANSCHLUSS IN HOTELS, KRANKENHÄUSERN ODER ÄHNLICHEM SOWIE ANTIEINDRINGUNGSSYSTEM FÜR DIESES ADRESSIERUNGSSYSTEM
SYSTÈME D'ADRESSAGE DE SERVICES DE TÉLÉVISION DANS DES RÉSEAUX NUMÉRIQUES MULTIPLEX DVBT OU DVBC POUR DES SYSTÈMES CENTRAUX D'HÔTELS/HÔPITAUX ET ANALOGUES ET SYSTÈME ANTI-INTRUSION APPLIQUÉ AUDIT SYSTÈME

(30) Priority: 21.05.2009 ES 200901260; 19.05.2010 ES 201030748
(43) Date of publication of application: 28.03.2012
(73) Proprietor: Montané Folch, Joan, 08450 Llinars Del Valles (Barcelona) (ES)
(72) Inventor: BARO RUIZ, Ramón, 08210 Barbera Del Valles (Barcelona) (ES); CLARENS BLANCO, Jaume, E-08210 Barbera Del Valles (Barcelona) (ES); GOMEZ ARESTE, Sergi, 08210 Barbera Del Valles (Barcelona) (ES); MARQUILLAS MASO, Jordi, 08210 Barbera Del Valles (Barcelona) (ES); MONTANÉ FOLCH, Joan, 08450 Llinars Del Valles (ES)
(74) Representative: Morgades y Manonelles, Juan Antonio
(86) International application number: PCT/ES2010/070343
(87) International publication number: WO 2010/133747

(56) References cited:
- EP-A2- 1 737 242
- US-A- 4 443 815
- US-A- 5 625 864
- US-A- 5 652 615

## Description

### OBJECT OF THE INVENTION

This invention refers to an addressing system for digital television signals (DVB) in hotel and hospital headends.

This addressing system offers pay per view services (PPV) for external reception channels (Satellite-DVBS/S2, terrestrial-DVBT/T2, cable-DVBC or ADSL-IP) or a combination of these (HbbTV - Hybrid broadcast broadband TV) or the replication of these systems in other standards as well as internal channels (e.g., "broadcast carrousel" type for instance) and which will be viewed by the users of rooms that :request and pay for the service via SMS, telephone call, Internet or other systems.

The addressing system also enables video on demand (VOD) or request of contents services, generated by an audio-visual service server, each item of which will be viewed in a single room (where it is requested and paid for by SMS (or other systems).

The advantage and novelty of this addressing system is the direct compatibility of signals generated in the headends of the installation with standard market DVBT-DVBC televisions/receivers, avoiding the use of additional equipment between the TV socket, and the room television.

This addressing system is protected against intrusion by means of external mechanisms, specifically by the replacement of the TV socket, of the hotel by a remotely manageable "tamperproof" socket so that users cannot disconnect the room television and tune into pay channels in their room or others, using other television sets, receivers or even PCs they may have.

This invention also refers to an anti-intrusion system applied to said addressing system, which substantially improves it, as it adds to its advantages of television addressing services, DVBT/C in hotels-hospitals with standard unmodified televisions or external devices, the fact that it is impossible for fraudulent users to view the services without authorisation, simply by replacing the pre-tuned and locked televisions in the installation by other standard televisions.

To achieve this, and avoid the aforementioned intrusion, with no additional device or manipulation of the television set, what is done is to modify the signal directed to all the televisions, by modifying the international standardised MPEG2, H264 and/or DVB tables after the initial the pre-tuning television sets and/or by DVB/CSA encoding with a generic password for all the televisions.

Some of these signal alterations are totally novel, such as the special manipulation of the international standard MPEG2, ISO/IEC and/or DVB tables, and others already applied for other applications, such as DVB/CSA-BISS encoding. However, in the latter case, they will be applied in a different manner, as they will have an anti-intrusion application without needing external devices and maintaining the addressing of television signals to authorised televisions, without modifying or adding any extra device.

However, the addressable application known and implemented up to now, which uses DVB/CSA encoding needs external devices (conditional access modules) in each television or the DVB/CSA-BISS encoding known and used up to now, cannot be addressed to specific televisions, as it is of generic type for all televisions.

The advantage and novelty of this anti-intrusion system consists in adding protection against intrusion to the addressing system using other receivers or televisions, without having to alter or add any devices to the televisions in the facility.

### FIELD OF THE INVENTION

These addressing and anti-intrusion systems are designed for hotel/hospital/apartment-type buildings, and the like, where users are temporary and do not own the television or room they are in, therefore the functions of the television can be limited and its tuning locked.

The cost of these systems is very low compared to current systems, due to the absence of additional equipment between the TV socket, and the standard DVBT television set.

### BACKGROUND OF THE INVENTION

Up to now, existing paid digital television systems in hotels (PPV/VOD), authorising viewing for users paying for the service and avoiding intrusion by replacing televisions, normally require an IP distribution system by Ethernet networks or a COFDM system by coaxial cable, with decryption systems in the receiver/television. This requires the implementation of STB (Set top boxes) or special televisions in each of the rooms and in the case of IP, the installation of a new Ethernet network in the hotel/hospital with the resulting considerable costs.

Alternatively, in the case of hospitals, it is common to fit much more economic ON/OFF coaxial equipment that allows no differentiation of contents, namely "the entire signal" is connected or disconnected according to whether the user has paid or not.

### SUMMARY OF THE INVENTION

These drawbacks and/or problems, and others that may arise from them, are avoided with the addressing system and with the anti-intrusion system of the present invention, of which the former enables the installation of an easy and economic addressing system for contents in hotel and hospital headends, valid for PPV/VOD (PPV pay per view; Video on demand or request) services, totally addressable to users that have paid for the services and directly compatible with standard DVBT televisions (terrestrial) or DVBC (cable) on the market, located in rooms, and the latter avoids intrusion by replacing televisions in the installation with other standard market televisions.

The addressing and anti-intrusion system of the present invention is based on the following principles:
- DVB/T-COFDM and/or DVB/C-QAM modulation is used so it can be compatible with all standard digital televisions on the market.
- The special application of this system, basically designed for hotels/hospitals and like, enables channel tuning of the televisions to be locked after the initial pre-tuning.
- Regular DVBT-DVBC televisions comply with DVB standards and, therefore, they continuously verify the Transport Stream (TS) information tables, therefore the basic addressing and anti-intrusion system in this invention is based on manipulating these tables (MPEG2-ISO/IEC 13818, H264-ISO/IEC 14496 and/or DVB-ETSI EN300468).

To avoid the use of other DVB televisions/receivers the user could have, the addressing and anti-intrusion system of the invention may optionally have a "tamperproof" TV socket remotely directional from the headend of the installation in the hotel-Hospital and similar and/or DVB/CSA encoding with a generic password in BISS system or similar (not specific for each television).

The aforementioned sub-systems enable addressing of signals only to authorised televisions in the facility and, at the same time will impede decoding by fraudulent users who try to replace the pre-tuned and locked televisions in the installation with other standard televisions on the market.

These and other characterising features will be best made apparent by the following detailed description whose understanding will be made easier by the accompanying three sheets of drawings showing a practical embodiment of the addressing system being cited only by way of example not limiting the scope of the present invention.

### DESCRIPTION OF THE DRAWINGS

In the drawings:
Figure 1 illustrates schematically the PAT and PMT tables of the mutiplex Transport stream with n Pay per View (PPV) services, for the pre-tuning of a certain television (room xxx - in the hotel).
Figure 2 illustrates schematically the PAT and PMT tables of the mutiplex Transport stream with a Video on demand (VOD) service, for the pre-tuning of a certain television (room xxx - in the hotel).
Figure 3 illustrates schematically the PAT and PMT tables of the mutiplex Transport stream with n Pay per View (PPV) services, for all the televisions in the hotel, prepared according to the phase shown en Figure 1 (rooms 101 to zzz) and which allows each television to view the contents of the info channel or the PPV contents (according to the payment of said service).
Figure 4 illustrates schematically the PAT and PMT tables of the mutiplex Transport stream with n Promo services, for all the televisions in the hotel.
Figure 5 illustrates schematically the PAT and PMT tables of the mutiplex Transport stream with n Video on demand (VOD) services, allowing the viewing of these contents in n televisions in the hotel prepared according to the phase illustrated in Figure 2 and who have paid this service, or to view the contents of the info channel in all the other televisions, also prepared according to the phase illustrated in figure 2.
Figures 6 and 7 illustrate an example of SMS management, Figure 6 showing the Info service and the payment system, and Figure 7 a diagram of the services are purchased.

### DETAILED DESCRIPTION OF A FORM OF A PREFERRED EMBODIMENT OF THE ADDRESSING SYSTEM OF THE INVENTION

### I.- INITIAL TUNING PHASE FOR TELEVISION SETS OR DVBT RECEIVERS

The password that allows the television of each room to view only permitted channels is established at the moment the televisions or DVBT receivers (1) in each room are tuned. This is based on the fact that once the channels have been tuned; the installer normally locks the television tuning (1) in the hotel/hospital (by means of protected menus in the television or supplying the user with simplified remote controls), so as to avoid undesired manipulation of tuning in all the hotel/hospital televisions.

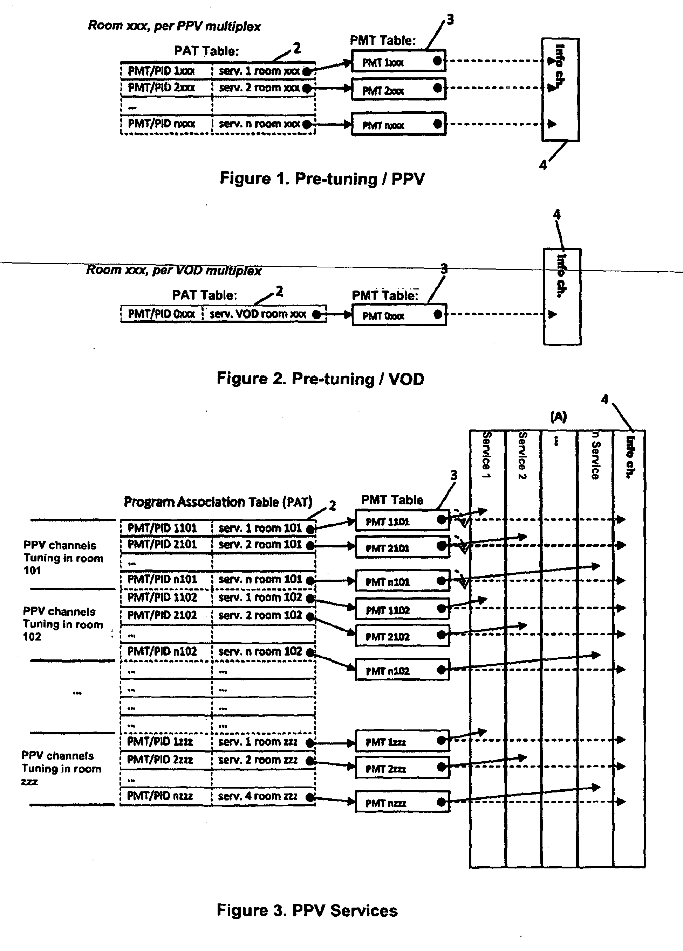

The installer has equipment that generates a COFDM signal that will only be used for tuning the television (1) in each room. During the tuning process of each television and for each of the RF pay channels, a COFDM Transport Stream (TS) will be transmitted that will only contain the PAT (2) and PMT (3) (DVBT standard) tables corresponding to each room and that will allow them to view:
- All the programs available in the TS in PPV mode. Therefore, for each RF or multiplex channel, this service will generate ad-hoc for room x the PAT, PMT and services indicated in Figure 1, where n is the number of available PPV channels in each multiplex and xxx is the room number/code. Note that the codes type 1xxx used in the illustrations are conceptual.
- One TS program in VOD mode (with the PAT/PMT tables in Figure 2). To offer simultaneous VOD service to a maximum number of rooms (m), "m/n" Transport Streams (TS) must be used for this service (where n is the number of programs in a transport stream).

To unify the TS of the initial tuning process and achieve automatic and identical order in all the televisions in the hotel, the LCN (Logical Channel number) system may be optionally used in the COFDM generating equipment for initial tuning or a television set-up system via USB or similar.

### II.- AUTHORIZING VIEWING OF PAY PER VIEW PROGRAMS (PPV)

Once all the televisions in the hotel/hospital have been prepared and locked and according to the steps in the previous phase, the headend system of this invention will generate the PAT (2) /PMT (3) tables indicated in Figure 3 in each of the Transport Streams, so that when the televisions are switched on, these tables will make the contents of the Info channel (4) viewable, but not the paid contents.

The PPV services shown in (A) (in figure 3) are each comprised of different elements or ES (Elementary Streams). Generally in the case of TV channels, they will consist of a minimum of 1 video MPEG2 channel and one audio channel. Additionally, there may be other types of services such as additional audio channels (normally multi-language), teletext, etc., these PPV services may also have been inserted in the headend of the installation, at the request of a customer in the hotel-hospital, enabling in this case access to other customers who request and pay for it (as it is a PPV service (not VOD restricted to a single customer).

The PMT of each service or channel matches all the ES in the service with the same, and indicates the type of ES (ISO/IEC 13818-1 section 2.4.4.9, stream_type).

The INFO service consists of one or several static pictures or videos that will present the user with information on PPV contents available and that can be bought.

When the guest in room x pays to access a pay per view channels, the system allows access to this content by updating the PMT corresponding to this room as follows:
- The PMT of room xxx (PMT 1xxx a nxxx, where n is the number of PPV programs in the Transport Stream) is modified so it contains the -PID's (packet identified) DVB- of the real services.
- Therefore they stop "pointing" to the PID's of the promo channel.
- The version number of these PMT is increased so the receiver will detect the change and is forced to re-read the PAT and PMT.

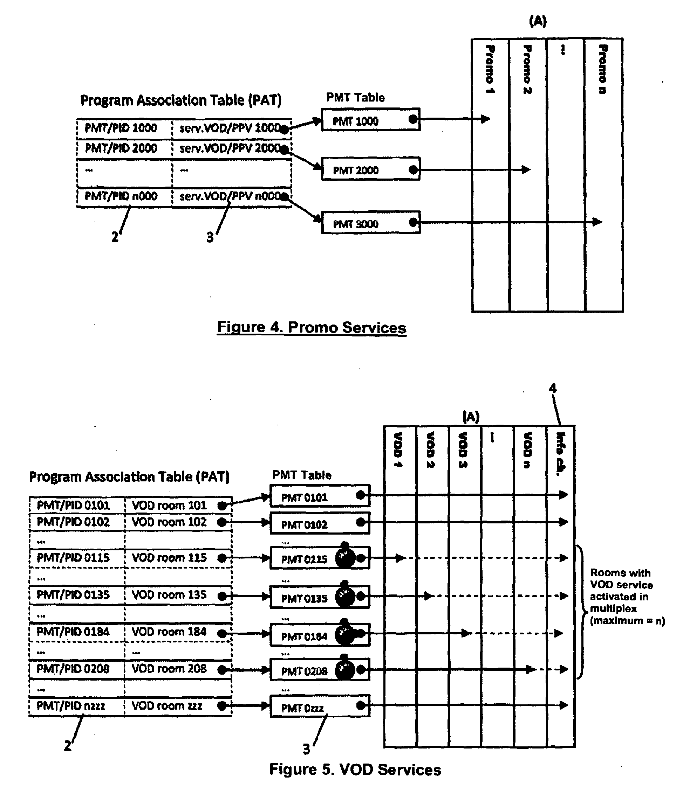

Payment services can be done preferably through SMS, a telephone call or Internet, following instructions given in the INFO service of the multiplex or another general multiplex especially prepared for this (Figure 4). The system for promotion and payment of these services can be carried out in any other manner, remaining within contents of this invention.

After an established time has passed, the headend system of this invention will again generate the PMT's corresponding to this room, returning it to its initial status, where the paid content is no longer viewable and the Info channel is displayed instead.

### III.- AUTHORIZATION FOR VIEWING VIDEO ON DEMAND PROGRAMS (VOD)

Once all the televisions in the hotel/hospital have been prepared and locked according to the INITIAL TUNING PHASE explained in the corresponding section in the DETAILED DESCRIPTION OF THE ADDRESSING SYSTEM OF THE INVENTION, the headend system of this invention will generate the PAT (2) /PMT (3) tables indicated in Figure 5, in each of the Transport Streams, so that when the televisions are switched on, these tables will make the contents of the Info channel (4) viewable, but not the paid contents.

The main difference with regard to PPV services is that the available services are assigned individually to the user or room hiring the service. Therefore, there will be a single PAT (2) per room -to offer a single simultaneous VOD service per room-, which will point to the corresponding PMT (3), which will also be unique per room and multiplex destined for VOD.

By default, all the PMT (3) point the receiver to the Info channel (4), with information contents. When the user purchases the right to view a VOD service, its corresponding PMT (3) (of a "free" Transport Stream) will direct the STB to the dynamically assigned service (1 of n), synchronised with the start of contents ordered from the headend.

Only n rooms may have assigned simultaneously one of the n services available in a multiplex. Therefore, according to the maximum number (m) of simultaneous VOD services that it is expected to provide, "m/n" Transport Streams should be used (where n is the number of services per Transport Stream).

For the user's television to tune into the program/channel where the VOD service is located, different mechanisms can be used, either automatic. (Modifying the television's software) or manual, by the user (with information given via SMS or on screen).

Each of the services described in Figure 5-A is composed of different elements or ES (Elementary Streams), generally in the case of TV channels; it will consist of at least 1 video MPEG2 channel and one audio channel. Additionally, there may be other types of services such as additional audio channels (stereo, multi-language), teletext, etc. The PMT of each service or channel matches all the ES in the service with the service, and indicates the type of ES (ISO/IEC 13818- 1 section 2.4.4.9, stream_type).

The INFO service (4) consists of one or several static pictures or videos that will present the user with information on PPV contents available and that can be bought.

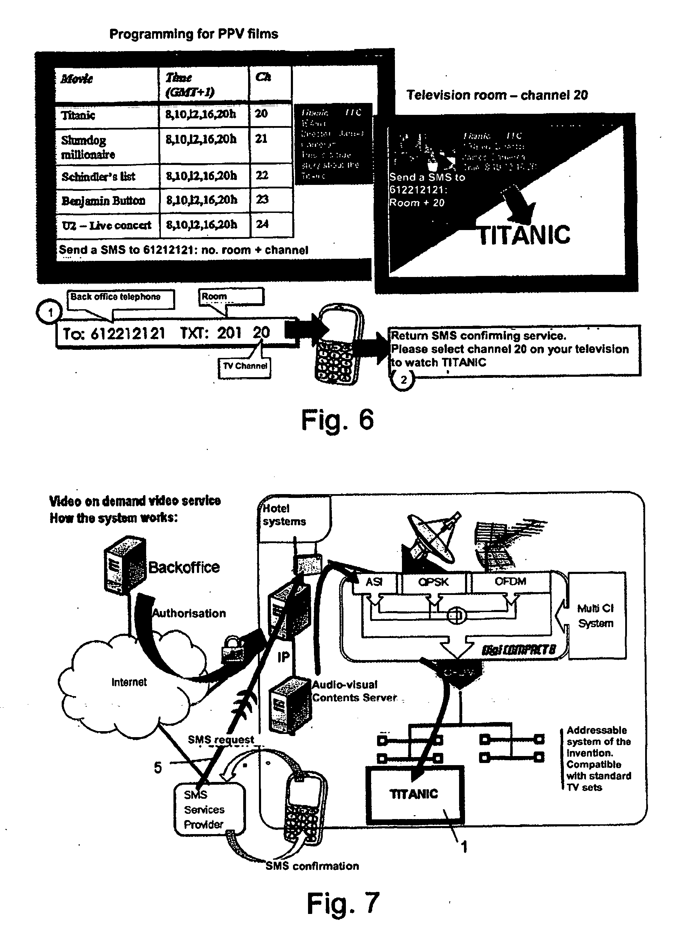

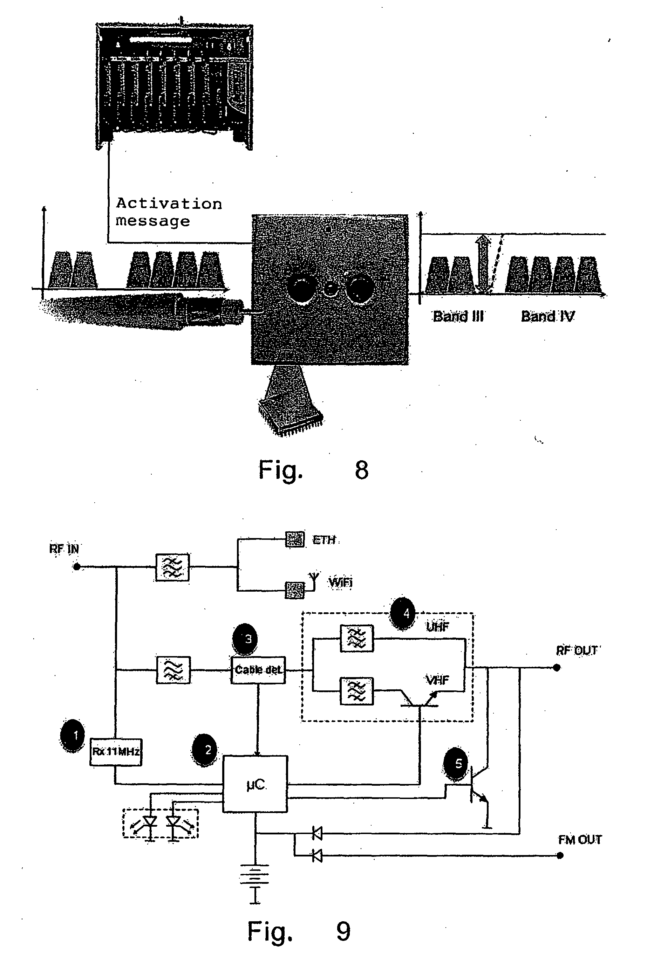

VOD payment services (And even temporary setting back, pausing or advancing the service) can be done through SMS, following instructions given in the INFO service of a multiplex especially prepared for this (Figure 4). See example of embodiment of the SMS management system (5) in Figures 6 and 7. The system for promotion and payment of these services can be carried out in any other manner, remaining within contents of this invention.

After an established time has passed, coinciding with the end of the VOD service, the headend system of this invention will again generate the PMT's (3) corresponding to this room, returning it to its initial status, where the paid content is no longer viewable and the Info channel (4) is displayed instead.

### IV.- DETAILED DESCRIPTION OF THE ANTI-INTRUSION SYSTEM, WITHOUT MANIPULATIONS OR EXTERNAL DEVICES FITTED TO THE TELEVISIONS:

The anti-intrusion system of the present invention is based on the following sub-systems, which can be applied separately or jointly:
SUB-SYSTEM 1: Modification of the ISO/IEC 13818 (MPEG2), ISO/IEC 14496 (H264) and/o EN300468 (DVB) standard international tables after initial television pre-tuning.

The system is based on the fact that standard DVBT or DVBC televisions on the market, which the customer may take to the hotel/hospital room need a tuning process to tune into the channels in the establishment. This process in DVB system needs most of the international standard MPEG2, H264 and/o DVB tables. Whereas the standard televisions in the hotel/hospital that are already pre-tuned and locked do not need some of these tables to be completely and correctly configured (Specifically SDT (Service Description Table), NIT (Network Information Table) and/or PMT/PAT (Program Map Table/Program Association Table)) in order to work.

As this involves possible modifications to three tables, the details to be used for each of them is described below:

### SUB-SYSTEM 1A: SDT TABLE MODIFICATION

This sub-system subject of the purpose of this invention is an anti-intrusion system applicable to an addressing system for multiplex television services in which the SDT (Service Description Table) table of the International DVB System is manipulated (according to ETSI EN 300 468 norms), after pre-tuning and locking the televisions, making it impossible to connect standard external televisions. This manipulation must maintain the operational functions of the system in such a manner that authorised televisions in the installations can view the service while non-authorised televisions cannot.

A specific embodiment of the invention, which achieves these requirements consists in changing the Service type of the Service Descriptor (ETSI-EN300468 Standard) to any option different from digital television service or digital radio sound service, making this change after pre-tuning and locking the televisions in the installations. In this manner, no standard DVB television or receiver will be able to tune into any audio-visual service, as these devices will only display on screen the video or radio services. This modification does not affect pre-tuned and locked televisions in the installations, as they already have the type of service memorized.

In addition, it comprises the use of any manipulated external DVBT/DVBC receiver/television or any software that manipulates any external DVBT/DVBC receiver/television, so that any DVB service with an option different from Digital Television Service or Digital Radio Sound Service in the Service Tape of the Service Descriptor of the SDT (ETSI EN300468) table is tuned as a Digital Television Service or Digital Radio Sound Service and, therefore, is presented on the television screen as a television and/or radio service.

In the same manner, it comprises the use of any manipulated external DVBT/DVBC receiver/television or any software that manipulates any external DVBT/DVBC receiver/television, so that any DVB service with an option different from Digital Television Service or Digital Radio Sound Service in the Service Tape of the Service Descriptor of the SDT (ETSI EN300468) table is tuned as a Digital Television Service or Digital Radio Sound Service and, therefore, is presented on the television screen as a television and/or radio service.

### SUB-SYSTEM 1B: NIT TABLE MODIFICATION

Another embodiment of the invention consists in eliminating or modifying the NIT (Network Information Table) tables after the televisions are pre-tuned and locked, as these tables are not completely indispensable in most televisions for the post-tuning process. With this elimination or manipulation, (Modifying the Network ID data or modifying modulation parameters), most televisions or DVB receivers on the market that are fraudulently connected to the installation, will not find the details of the transport stream (TS) and, therefore, will not be able to tune to its services. At the same time, the pre-tuned and locked televisions in the installations will maintain and view the services, as they have memorised the NIT table data, making this invention anti-intrusion and maintaining its operational addressing features.

### SUB-SYSTEM 1C: PMT TABLE MODIFICATION OF THE AUTHORISED SERVICE AND ITS CORRESPONDING INFORMATION IN THE PAT TABLE

Another embodiment of the invention consists in eliminating the PMT (Program Map Table) tables corresponding to the authorised services, as well as eliminating the corresponding information in the PAT table, after carrying out the request and granting the service.

This information is necessary to enable the television that has just requested and paid for the service to tune into it and in most televisions it is stored in its memory, so they are no longer necessary until the service has to be locked again when the payment period has expired. During the period without these tables operational, standard market televisions fraudulently connected to the installation will not be able to tune into the channel, as the PMT tables and information in the PAT table are necessary for the tuning process.

Another option is to manipulate the PMT and PAT tables by adding non-existent services to deceive the intruding television/receiver, impeding correct tuning by saturating its internal memory.

### SUB-SYSTEM 2: DVB/CSA encoding with a generic password (not specific for each television)

This sub-system achieves a different form of anti-intrusion, adding to the addressing system a DVB/CSA (Common Scrambling Algorithm of system DVB) type known encoding with a generic password for the entire installation, entered optionally by means of a system also known as BISS (Basic Interoperable Scrambling System).

Although these -systems are already known, the novelty resides in applying them in a different manner, because when they do it jointly with the addressing system they will create an anti-intrusion function without needing external devices and at the same time maintaining the direction of television signals to the authorised televisions, all without manipulating or adding any device to the standard television ready for this type of decoding.

However, the application known and implemented up to now, which uses DVB/CSA encoding always needs external devices (conditional access modules) in each television or the DVB/CSA-BISS encoding known and used up to now, cannot be directed to specific televisions, as it is of generic type for all televisions.

### SUB-SYSTEM 3: CHANGING DVBT (COFDM) MODULATION TO DVBC (QAM) IN HOSPITAL AND HOTEL INSTALLATIONS IN TELEVISIONS ALLOWING THIS TYPE OF MODULATION.

This sub-system achieves a different form of anti-intrusion, adding a change of DVBT (COFDM) modulation to DVBC (QAM) in the addressing system, as long as the televisions in the installation admit this type of modulation and intrusive televisions do not have it.

Although this modulation is already known, the novelty is that it is applied in a different manner, because as it is done together with the addressing system it will offer anti-intrusion features (As users will rarely have DVBC televisions) and at the same time it will maintain the direction of television signals to authorised televisions, without manipulating or adding any device to the standard television.

However, the DVBC (QAM) modulation known and implemented up to now without the combination of the addressing system, could avoid intrusion to DVBT (COFDM) televisions the user could have, but to achieve the addressing of services needs external devices (conditional access modules) in each television.

## Claims

1. An addressing system for DVBT or DVBC digital multiplex television services for headends in hotels, hospitals and the like, using international ISO/IEC13818 (MPEG-2), ISO/IEC 14496 (H264) and/or EN300468 (DVB) standard tables, **characterised in that** to achieve addressing to one or several televisions in the installations of the mentioned hotel-hospital headends, these tables and televisions are manipulated in the following manner:
- creating as many virtual channels as independent viewpoints exist, for each multiplex service, using a PMT table and/or its tables associated for each of these virtual channels,
- pre-tuning the receivers or televisions to their corresponding virtual channels and then locking the tuning.
- dynamically switching for each television/receiver, according to their access rights, the ES, tables or applications indicated in their corresponding PAT, PMT, AIT tables and/or their associated tables, and
- including an anti-intrusion system based on the manipulation or elimination of, especially, the SDT and/or NIT tables, thus stopping other televisions from tuning in and at the same time maintaining those already tuned operational,
- addressing in real time the PIDs (packet identified DVB) - of the PMT tables or the promotional contents of the PPV/ VOD service or to the PPV / VOD programme, according to whether these services have been paid for by the user
The addressing system also uses a PAT (2) information table that contains the PIDs (packet identified DVB) of said PMTs.

2. An addressing system for digital multiplex television services for the headends of hotels, hospitals and the like, according to the claim 1, **characterised in that** many groups of n PMT (3) information table are used such as televisions (1) in the hotel, n being the number of programs of the multiplex.

3. An addressing system for digital multiplex television services for the headends of hotels, hospitals and the like, according to the claim 1, **characterised in that** many groups of PMT (3) information table are used such as televisions (1) with video on demad (VOD) service in the hotel.

4. An addressing system for digital multiplex television services for the headends of hotels, hospitals and the like, according to the claim 1, **characterised in that** it uses a PAT (2) information table that contains alternatively two PIDs: one for the PMTs that are permanently addressed to video services and another for the PMTs indicated in aforementioned claims 1 and 2 or 1 and 3 that are permanently addressed to the INFO services (4) the maximum number of PMTs by multiplex being in each case the product of the number of televisions (1) by the number of multiplex services.

5. An addressing system for digital multiplex television services for the headends of hotels, hospitals and the like, according to the claim 1, **characterised in that** it uses a PAT (2) information table that contains only the PIDs of the PMTs corresponding to rooms that have paid for the service, these PMTs being permanently addressed to the video services.

6. An addressing system for digital multiplex television services for the headends of hotels, hospitals and the like, according to the claim 1, **characterised in that** the televisions are previously tuned with special multiplex that contains only the PMTs (3) and PATs (2) corresponding to the room.

7. An addressing system for digital multiplex television services for the headends of hotels, hospitals and the like, according to any one of the preceding claims, **characterised in that** the user orders and pays for the service via SMS (5), a telephone call or Internet, to a certain back office (6), following on screen instructions given by the promotional channel of the service and, optionally, from SMS received from the back office.

8. An addressing system for digital multiplex television services for the headends of hotels, hospitals and the like, according to any one of the preceding claims, **characterised in that** to include the modified MPEG-2, H264 and/or DVB information tables some services of the original multiplex are marked as null packets so as to be deleted later and thus to obtain a multiplex adapted to the characteristics of the DVB-T system.

9. An addressing system for digital multiplex television services for the headends of hotels, hospitals and the like, according to claims 1 to 9, that only use standard televisions on the market without alterations or external devices, **characterised by** modifying the signal addressed equally to all the televisions in the installation, without altering or adding devices to these standard televisions, consisting in a modification of the international standard ISO/IEC 13818 (MPEG2), ISO/IEC 14496 (H264) and/or ETSI EN300468 (DVB) tables after television pre-tuning and/or by a DVB/CSA encoding with a generic password, which allows addressing of the signals only to authorised televisions in the installation and at the same time impedes fraudulent users replacing pre-tuned and locked televisions in the installation by other standard televisions on the market.

10. An anti-intrusion system applied to the addressing system, according to the claims 1-9, **characterised in that** intrusion with external televisions/receivers is avoided by modifying the SDT (Service Description Table) table, after pre-tuning and locking the televisions.

11. An anti-intrusion system applied to the addressing system, according to the claim 10, **characterised in that** intrusion with external televisions/receivers is avoided by modifying the SDT (Service Description Table) table, that consists in changing the Service type of the Service Descriptor (ETSI EN 300 468) to any option different from digital television service or digital radio sound service in a permanent or variable manner, after pre-tuning and locking the televisions.

12. An anti-intrusion system applied to the addressing system, according to the claim 10, **characterised in that** intrusion is avoided::
(a) with external televisions/receivers by eliminating the NIT (Network Information Table) tables or their modification, making them into non-operational, after pre-tuning and locking the televisions; or
(b) with external televisions/receivers by eliminating or modifying the PMT tables corresponding to authorised services or manipulating the information corresponding to the PAT table, after the service has been requested and granted; or
(c) with external televisions/receivers through added DVB/CSA (Common Scrambling Algoritm of system DVB) type encoding with a generic password for the entire installation, optionally in BISS (Basic Interoperable Scrambling System) system, present both in the headend and in all the televisions/receivers in the installation; or
(d) with external DVBT (COFM) receivers by using a DVBC (QAM) modulation in installations with televisions that accept this type of modulation.

13. An anti-intrusion system applied to the addressing system, according to the claim 11, **characterised in that** it comprises the use of any manipulated external DVBT/DVBC receiver/television or any software that manipulates any external DVBT/DVBC receiver/television, so that any DVB service with an option different from Digital Television Service or Digital Radio Sound Service in the Service Tape of the Service Descriptor of the SDT (ETSI EN300468) table is tuned as a Digital Television Service or Digital Radio Sound Service and, therefore, is presented on the television screen as a television and/or radio service.

14. An anti-intrusion system applied to the addressing system, according to the claim 13, **characterised in that** it comprises the use of any manipulated external DVBT/DVBC receiver/television or any software that manipulates any external DVBT/DVBC receiver/television, so that any DVB service with an option different from Digital Television Service or Digital Radio Sound Service in the Service Tape of the Service Descriptor of the SDT (ETSI EN300468) table is tuned as a Digital Television Service or Digital Radio Sound Service and, therefore, is presented on the television screen as a television and/or radio service.

## Patentansprüche

1. Adressierungssystem für digitale DVB-T- oder DVB-C-Multiplex-Fernsehdienste für Kopfstellen in Hotels, Krankenhäusern und dergleichen unter Verwendung von Tabellen nach den internationalen Normen ISO/IEC13818 (MPEG-2), ISO/IEC 14496 (H264) und/oder EN300468 (DVB), **dadurch gekennzeichnet, dass** zur Adressierung einer oder mehrerer Fernsehgeräte in den Kopfstellenanlagen der Hotels bzw. Krankenhäuser diese Tabellen und Fernsehgeräte folgendermaßen bearbeitet werden:
- Für jeden Multiplex-Dienst werden so viele virtuelle Kanäle erzeugt, wie unabhängige Viewer-Standorte vorhanden sind, und zwar unter Verwendung einer PMT-Tabelle und/oder deren verbundener Tabellen für jeden dieser virtuellen Kanäle.
- Die Receiver oder Fernsehgeräte werden vorab auf ihre jeweiligen virtuellen Kanäle eingeregelt und anschließend wird die Einregelung gesperrt.
- Für jedes Fernsehgerät/jeden Receiver erfolgt eine dynamische Umschaltung gemäß den jeweiligen Zugriffsrechten, ES, Tabellen oder Anwendungen, die in den entsprechenden PAT-, PMT-, AIT-Tabellen und/oder verbundenen Tabellen aufgeführt sind.
- Integrierung eines Eindringungsschutzsystems basierend auf der Bearbeitung oder Entfernung insbesondere von SDT-und/oder NIT-Tabellen, sodass sich andere Fernsehgeräte nicht einregeln lassen und gleichzeitig die bereits eingeregelten Fernsehgeräte betriebsbereit bleiben.
- Durch Echtzeit-Adressierung der PIDs (PID: *packet identified DVB*) der PMT-Tabellen oder der Werbeinhalte von PPV / VOD-Diensten oder PPV / VOD-Programmen, je nachdem, für welche dieser Dienste der Nutzer gezahlt hat.
Das Adressierungssystem verwendet ebenfalls eine PAT (2)-Informationstabelle, welche die PIDs *(packet identified DVB)* für diese PMTs enthält.

2. Adressierungssystem für digitale Multiplex-Fernsehdienste für Kopfstellen in Hotels, Krankenhäusern und dergleichen nach Anspruch 1, **dadurch gekennzeichnet, dass** viele Gruppen von n PMT (3)-Informationstabellen verwendet werden, wie beispielsweise Fernsehgeräte (1) im Hotel, wobei n die Anzahl der Programme des Multiplexes darstellt.

3. Adressierungssystem für digitale Multiplex-Fernsehdienste für Kopfstellen in Hotels, Krankenhäusern und dergleichen nach Anspruch 1, **dadurch gekennzeichnet, dass** viele Gruppen von PMT (3)-Informationstabellen verwendet werden, wie beispielsweise Fernsehgeräte (1) mit Video-on-Demand (VOD)-Diensten im Hotel.

4. Adressierungssystem für digitale Multiplex-Fernsehdienste für Kopfstellen in Hotels, Krankenhäusern und dergleichen nach Anspruch 1, **dadurch gekennzeichnet, dass** eine PAT (2)-Informationstabelle verwendet wird, die alternativ zwei PIDs enthält: ein PID für die PMTs, die dauerhaft an die Videodienste adressiert sind, und ein weiterer PID für die in den vorangehenden Ansprüchen 1 und 2 oder 1 und 3 genannten PMTs, die dauerhaft an die Info-Dienste (4) adressiert sind, wobei die maximale Anzahl an PMTs im Multiplexverfahren in jedem Fall das Ergebnis der Multiplikation der Anzahl der Fernsehgeräte (1) mit der Anzahl der Multiplex-Dienste ist.

5. Adressierungssystem für digitale Multiplex-Fernsehdienste für Kopfstellen in Hotels, Krankenhäusern und dergleichen nach Anspruch 1, **dadurch gekennzeichnet, dass** eine PAT-(2) Informationstabelle verwendet wird, die nur die PIDs der PMTs enthält, die den Räumen entsprechen, die für den Dienst bezahlt haben, wobei diese PMTs dauerhaft an die Videodienste adressiert sind.

6. Adressierungssystem für digitale Multiplex-Fernsehdienste für Kopfstellen in Hotels, Krankenhäusern und dergleichen nach Anspruch 1, **dadurch gekennzeichnet, dass** die Fernsehgeräte vorab mit einem speziellen Multiplex eingeregelt werden, der nur die dem jeweiligen Raum entsprechenden PMTs (3) und PATs (2) enthält.

7. Adressierungssystem für digitale Multiplex-Fernsehdienste für Kopfstellen in Hotels, Krankenhäusern und dergleichen nach einem der vorhergehenden Ansprüche, **dadurch gekennzeichnet, dass** der Nutzer den Dienst per SMS (5), Telefonanruf oder Internet bei einer bestimmten Abwicklungsstelle (Backoffice) (6) bestellt und bezahlt, wobei er nach den Bildschirmanweisungen des Werbekanals des Dienstes bzw. optional nach einer vom Backoffice empfangenen SMS vorgeht.

8. Adressierungssystem für digitale Multiplex-Fernsehdienste für Kopfstellen in Hotels, Krankenhäusern und dergleichen nach einem der vorhergehenden Ansprüche, **dadurch gekennzeichnet, dass** zur Einbeziehung der modifizierten MPEG-2-, H264- und/oder DVB-Informationstabellen einige Dienste des ursprünglichen Multiplexes als Nullpakete markiert sind, sodass sie später gelöscht werden und auf diese Weise ein an die Eigenschaften des DVB-T-Systems angepasster Multiplex erzielt wird.

9. Adressierungssystem für digitale Multiplex-Fernsehdienste für Kopfstellen in Hotels, Krankenhäusern und dergleichen nach Ansprüchen 1 bis 9, das lediglich marktübliche' Standardfernseher ohne Änderungen und ohne externe Geräte nutzt, **dadurch gekennzeichnet, dass** das Signal, das gleichmäßig an alle Fernsehgeräte innerhalb der Anlage adressiert ist, modifiziert wird, ohne diese Standardfernseher zu ändern oder Geräte hinzuzufügen, und zwar bestehend aus einer Modifizierung der Tabellen nach den internationalen ISO/IEC 13818 (MPEG2)-, ISO/IEC 14496 (H264)- und/oder ETSI EN300468 (DVB)-Normen nach vorheriger Einregelung der Fernsehgeräte und/oder durch DVB/CSA-Kodierung mit einem allgemeinen Passwort, das die Adressierung der Signale nur an zugelassene Fernseher innerhalb der Anlage ermöglicht und gleichzeitig verhindert, dass Nutzer mit betrügerischen Absichten vorab eingeregelte und gesperrte Fernseher innerhalb der Anlage durch marktübliche Standardfernseher ersetzen.

10. Ein auf das Adressierungssystem nach Ansprüchen 1 bis 9 angewandtes Eindringungsschutzsystem, **dadurch gekennzeichnet, dass**, nach der vorherigen Einregelung und Sperrung der Fernsehgeräte ein Eindringen durch externe Fernsehgeräte/Receiver vermieden wird, indem die SDT-Tabelle (SDT: Service Description Table) modifiziert wird.

11. Ein auf das Adressierungssystem nach Anspruch 10 angewandtes Eindringungsschutzsystem, **dadurch gekennzeichnet, dass** ein Eindringen durch externe Fernsehgeräte/Receiver vermieden wird, indem die SDT-Tabelle (SDT: *Service Description Table*) modifiziert wird, und zwar so, dass nach der vorherigen Einregelung und Sperrung der Fernsehgeräte die Art des Dienstes des Dienstdeskriptors *(Service Descriptor)* (ETSI EN 300 468) in einer dauerhaften oder veränderlichen Weise in eine Option abgewandelt wird, die nicht mit dem digitalen Fernsehdienst oder dem digitalen Hörfunkdienst identisch ist.

12. Ein auf das Adressierungssystem nach Anspruch 10 angewandtes Eindringungsschutzsystem, **dadurch gekennzeichnet, dass** ein Eindringen folgendermaßen vermieden wird:
(a) bei externen Fernsehgeräten/Receivern durch Eliminierung der NIT-Tabellen (NIT: *Network Information Table*) oder durch deren Modifizierung, sodass sie nach vorheriger Einregelung und Sperrung der Fernseher nicht mehr betriebsfähig sind; oder
(b) bei externen Fernsehgeräten/Receivern durch Eliminierung oder Modifizierung der den zugelassenen Diensten entsprechenden PMT-Tabellen oder durch Bearbeitung der Informationen der PAT-Tabelle, nachdem der Dienst angefordert und genehmigt wurde; oder
(c) bei externen Fernsehgeräten/Receivern durch hinzugefügte DVB/CSA-Typcodierung (DVB/CSA: Common-Scrambling-Algorithmus des DVB-Systems) mit einem allgemeinen Passwort für die gesamte Anlage, optional im BISS-System (BISS: *Basic Interoperable Scrambling System*), die sowohl in der Kopfstelle als auch in allen Fernsehgeräten/Receivern der Anlage vorhanden ist; oder
(d) bei externen DVB-T (COFM)-Receivern durch Verwendung einer DVB-C (QAM)-Modulation in Anlagen mit Fernsehgeräten, die diese Modulationsart zulassen.

13. Ein auf das adressierungssystem nach anspruch 11 angewandtes eindringungsschutzsystem, **dadurch gekennzeichnet, dass** es die Verwendung von bearbeiteten externen DVB-T/DVBC-Receivern/Fernsehgeräten oder von jeglicher Software umfasst, die externe DVB-T/DVBC-Receiver/Fernsehgeräte bearbeitet, sodass jeglicher DVB-Dienst mit einer anderen Option als dem digitalen Fernsehdienst oder dem digitalen Hörfunkdienst auf dem Service Tape des Dienstdeskriptors der SDT (ETSI EN300468)-Tabelle als digitaler Fernsehdienst oder digitaler Hörfunkdienst eingeregelt wird und daher auf dem Fernsehbildschirm als Fernseh- und/oder Hörfunkdienst dargestellt wird.

14. Ein auf das adressierungssystem nach anspruch 13 angewandtes eindringungsschutzsystem, **dadurch gekennzeichnet, dass** es die Verwendung von bearbeiteten externen DVB-T/PVBC-Receivern/Fernsehgeräten oder von jeglicher Software umfasst, die externe DVB-T/DVBC-Receiver/Fernsehgeräte bearbeitet, sodass jeglicher DVB-Dienst mit einer anderen Option als dem digitalen Fernsehdienst oder dem digitalen Hörfunkdienst auf dem Service Tape des Dienstdeskriptors der SDT (ETSI EN300468)-Tabelle als digitaler Fernsehdienst oder digitaler Hörfunkdienst eingeregelt wird und daher auf dem Fernsehbildschirm als Fernseh- und/oder Hörfunkdienst dargestellt wird.

## Revendications

1. Un système d'adressage pour des services de télévision multiplex numérique DVBT ou DVBC pour les têtes de réseau dans des hôtels, hôpitaux et similaires, employant les tableaux des normes internationales ISO/IEC13818 (MPEG-2), ISO/IEC 14496 (H264) et/ou EN300468 (DVB), **caractérisé en ce que** pour obtenir un adressage à un ou plusieurs téléviseurs dans les installations desdites têtes de réseau de l'hôtel-hôpital, ces tableaux et téléviseurs sont manipulés de la manière suivante :
- en créant autant de chaînes virtuelles que de points de vue indépendants existants, pour chaque service multiplex, en utilisant un tableau PMT et/ou ses tableaux associés à chacune de ces chaînes virtuelles,
- en préréglant les récepteurs ou les téléviseurs sur leurs chaînes virtuelles correspondantes puis en bloquant le réglage.
- en commutant dynamiquement chaque téléviseur/récepteur, en fonction de leurs droits d'accès, ES, tableaux ou applications indiquées dans leurs correspondants tableaux PAT, PMT, AIT et/ou leurs tableaux associés, et
- en incluant un système anti-intrusion basé sur la manipulation ou l'élimination, notamment, des tableaux SDT et/ou NIT, en stoppant ainsi le réglage d'autres téléviseurs et, en même temps, en conservant ceux qui sont déjà réglés pour fonctionner,
- en adressant en temps réel les PID (paquet identifié DVB) des tableaux PMT ou le contenu promotionnel du service PPV / VOD ou le programme PPV / VOD, si ces services ont été payés par l'utilisateur.
Le système d'adressage utilise également un tableau d'information PAT (2) qui contient les PID (paquet identifié DVB) desdits PMT.

2. Un système d'adressage pour des services de télévision numérique multiplex pour les têtes de réseau dans des hôtels, hôpitaux et similaires, conformément à la revendication 1, **caractérisé en ce que** de nombreux groupes de n tableaux d'information PMT (3) sont utilisés comme des téléviseurs (1) dans l'hôtel, n étant le nombre de programmes du multiplex.

3. Un système d'adressage pour des services de télévision numérique multiplex pour les têtes de réseau dans des hôtels, hôpitaux et similaires, conformément à la revendication 1, **caractérisé en ce que** de nombreux groupes du tableau d'information PMT (3) sont utilisés comme des téléviseurs (1) avec service de vidéo sur demande (VOD) dans l'hôtel.

4. Un système d'adressage pour des services de télévision numérique multiplex pour les têtes de réseau dans des hôtels, hôpitaux et similaires, conformément à la revendication 1, **caractérisé en ce qu'**il utilise le tableau d'information PAT (2) qui contient alternativement deux PID : un pour les PMT qui sont adressés en permanence aux services vidéo et un autre pour les PMT indiqués dans les revendications précitées 1 et 2 ou 1 et 3 qui sont adressés de façon permanente aux services INFO (4), le nombre maximum de PMT par multiplex étant dans chaque cas le produit du nombre de téléviseurs (1) par le nombre de services multiplex.

5. Un système d'adressage pour des services de télévision numérique multiplex pour les têtes de réseau dans des hôtels, hôpitaux et similaires, conformément à la revendication 1, **caractérisé en ce qu'**il emploie un tableau d'information PAT (2) qui contient uniquement les PID des PMT correspondant aux chambres qui ont payé pour le service, ces PMT étant en permanence adressés aux services vidéo.

6. Un système d'adressage pour des services de télévision numérique multiplex pour les têtes de réseau dans des hôtels, hôpitaux et similaires, conformément à la revendication 1, **caractérisé en ce que** les téléviseurs sont réglés au préalable avec un multiplex spécial qui contient uniquement les PMT (3) et PAT (2) correspondant à la chambre.

7. Un système d'adressage pour des services de télévision numérique multiplex pour les têtes de réseau dans des hôtels, hôpitaux et similaires, selon l'une des revendications précédentes, **caractérisé en ce que** l'utilisateur commande et paie pour le service par SMS (5), un appel téléphonique ou Internet, à un certain back office (6), en suivant les instructions proposées à l'écran par la chaîne promotionnelle du service et, en option, depuis un SMS reçu du back office.

8. Un système d'adressage pour des services de télévision numérique multiplex pour les têtes de réseau dans des hôtels, hôpitaux et similaires, selon l'une des revendications précédentes, **caractérisé en ce que** pour inclure les tableaux d'information modifiés MPEG-2, H264 et/ou DVB, certains services du multiplex d'origine sont marqués comme des paquets vides à retirer par la suite et obtenir ainsi un multiplex adapté aux caractéristiques du système DVB-T.

9. Un système d'adressage pour des services de télévision numérique multiplex pour les têtes de réseau dans des hôtels, hôpitaux et similaires, conformément à les revendications 1 à 9, qui utilise uniquement des téléviseurs standard du marché sans modifications ou périphériques externes, **caractérisé par** la modification du signal adressé équitablement à tous les téléviseurs de l'installation, sans modifier ou ajouter des périphériques à ces téléviseurs standard, consistant dans une modification des tableaux de la norme internationale ISO/IEC 13818 (MPEG2), ISO/IEC 14496 (H264) et/ou ETSI EN300468 (DVB) après le préréglage du téléviseur et/ou par un codage DVB/CSA avec un mot de passe générique, qui permet d'adresser des signaux uniquement à des téléviseurs autorisés dans l'installation et, même temps, qui empêche les utilisateurs frauduleux de remplacer les téléviseurs préréglés et bloqués de l'installation par d'autres téléviseurs standard du marché.

10. Un système anti-intrusion appliqué au système d'adressage, conformément à les revendications 1 à 9, **caractérisé en ce que** l'intrusion de téléviseur/récepteurs externes est évitée par la modification du SDT (Tableau de Description de Service), après le préréglage et le blocage des téléviseurs.

11. Un système anti-intrusion appliqué au système d'adressage, conformément à la revendication 10, **caractérisé en ce que** l'intrusion de téléviseur/récepteurs externes est évitée par la modification du SDT (Tableau de Description de Service), qui consiste à changer le type de service du Service Descripteur *(Service Descriptor)* (ETSI EN 300 468) à toute option de service autre de service de télévision numérique ou de service de radio numérique d'une manière permanente ou variable, après le préréglage et le blocage des téléviseurs.

12. Un système anti-intrusion appliqué au système d'adressage, conformément à la revendication 10, **caractérisé en ce que** l'intrusion est évitée :
(a) avec des téléviseurs/récepteurs externes en éliminant les tableaux NIT (Tableau d'Information sur les Réseaux), ou leur modification, en les rendant non-opérationnels après le préréglage et le blocage des téléviseurs ; ou
(b) avec des téléviseurs/récepteurs externes en éliminant ou modifiant les tableaux PMT correspondant aux services autorisés ou en manipulant l'information correspondant au tableau PAT, quand le service a été demandé et payé ; ou
(c) avec des téléviseurs/récepteurs externes par le biais d'un codage ajouté de type DVB/CSA (Algorithme d'Embrouillage Commun du Système DVB) avec un mot de passe générique pour l'ensemble de l'installation, en option avec le système BISS (Système d'Embrouillage de Base Compatible), présent à la fois dans la tête de réseau et dans tous les téléviseurs/récepteurs de l'installation ; ou
(d) avec des récepteurs DVBT (COFM) externes en utilisant une modulation DVBC (QAM) dans les installations avec des téléviseurs qui acceptent ce type de modulation.

13. Un système anti-intrusion appliqué au système d'adressage, conformément à la revendication 11, **caractérisé en ce qu'**il comprend l'utilisation de n'importe quel récepteur/téléviseur DVBT/DVBC externe manipulé ou tout logiciel qui manipule tout récepteur/téléviseur DVBT/DVBC externe, de sorte que tous les services DVB avec une option différente du Service de Télévision Numérique ou du Service de Radio Numérique sur la bande de service du Service Descripteur du tableau SDT (ETSI EN300468) sont réglés comme un Service de Télévision Numérique ou un Service de Radio Numérique et, par conséquent, sont affichés à l'écran du téléviseur comme un service de télévision et/ou de radio.

14. Un système anti-intrusion appliqué au système d'adressage, conformément à la revendication 13, **caractérisé en ce qu'**il comprend l'utilisation de n'importe quel récepteur/téléviseur DVBT/PVBC externe manipulé ou tout logiciel qui manipule tout récepteur/téléviseur DVBT/DVBC externe, de sorte que tous les services DVB avec une option différente du Service de Télévision Numérique ou du Service de Radio Numérique sur la bande de service du Service Descripteur du tableau SDT (ETSI EN300468) sont réglés comme un Service de Télévision Numérique ou un Service de Radio Numérique et, par conséquent, sont affichés à l'écran du téléviseur comme un service de télévision et/ou de radio.
